# DEMANDE DE BREVET EUROPEEN

(11) **EP 4 657 299 A1**
(43) Date de publication de la demande: **03.12.2025**
(21) Numéro de dépôt: 24178294.5
(22) Date de dépôt: 27.05.2024
(51) Int. Cl.: G06F 21/64, H04L 9/32, H04L 9/40

(54) **PROCÉDÉ DE SIGNATURE ÉLECTRONIQUE PRÉSERVANT LA CONFIDENTIALITÉ DU DOCUMENT À SIGNER ENVERS LE SERVICE DE SIGNATURE ÉLECTRONIQUE**

(71) Demandeur: IgniSign S.A., 1911 Luxembourg (LU)
(72) Inventeur: JENOUDET, Julien, 2411 LUXEMBOURG (LU); CAYON, Paul-Claude, 57000 METZ (FR)
(74) Mandataire: Oudin, Stéphane

(57) **Abrégé**

Procédé de signature d'un document électronique comprenant les étapes:
- [50] initialisation d'une demande de signature de document par un commanditaire de la demande de signature et fourniture, vers un service de signature électronique, d'une première somme de contrôle spécifique du document à signer,
- [100] demande d'initialisation, par une application exploitante, d'une session de signature à instancier au sein d'une interface de signature,
- [200] la fourniture à ladite interface de signature par ladite application exploitante des éléments permettant l'initialisation d'une session de signature,
- [300] la fourniture par ledit service de signature à l'interface de signature des données relatives à l'initialisation de la session de signature comprenant ladite première somme de contrôle,
- [400] l'émission par ladite interface de signature vers ladite application exploitante d'une demande de fourniture dudit document à signer ou d'une URI permettant d'y accéder,
- [500] fourniture par ladite application exploitante des données dudit document à signer ou l'URI permettant d'accéder au dit document à signer,
- [600] récupération par ladite interface de signature des données dudit document à signer si l'information fournie à l'étape [500] est une URI.
- [700] le calcul, par ladite interface de signature, d'une somme de contrôle dudit document à signer récupéré à l'étape [500] ou [600] et comparaison, par ladite interface de signature, de ladite première somme de contrôle avec ladite somme de contrôle,
- [800] présentation à l'approbateur, par ladite interface de signature, dudit document à signer,
- [1100] autorisation, par ladite interface de signature, de l'approbation par l'approbateur dudit document à signer sous réserve que la comparaison effectuée à l'étape [700] montre l'identité des deux sommes de contrôle.

## Description

### Domaine technique

La présente invention concerne le domaine des signatures électroniques de documents électroniques et plus particulièrement un procédé de signature électronique d'un document électronique assurant la confidentialité du document vis-à-vis des prestataires fournissant le service de signature.

### Technique antérieure

L'invention se rapporte au domaine de la signature électronique et des technologies associées. La signature électronique est étroitement liée aux technologies de cryptographie numérique, notamment à la cryptographie asymétrique, qui repose sur le principe des paires de clés cryptographiques. Dans le processus de signature électronique, la clé privée d'une paire de clés asymétriques est utilisée pour signer numériquement des données selon des procédés bien établis et reconnus par les experts du domaine. Par ailleurs, la clé publique de la paire permet de vérifier que la signature électronique a été effectuée avec la clé privée correspondante. Ce mécanisme assure la confidentialité de la clé privée tout en autorisant toute entité détenant la clé publique à confirmer l'authenticité de la signature électronique réalisée avec la clé privée. Une technologie fréquemment associée à celle de la signature électronique de documents est celle des certificats électroniques, qui permet de relier une signature électronique à une source de confiance. Les structures hiérarchiques entre les autorités de certification et les certificats destinés aux utilisateurs finaux sont des concepts bien établis et reconnus par les spécialistes du domaine. Les principes de l'infrastructure à Clés Publiques (PKI) et les mises en oeuvre de technologies de certificats électroniques, comme la norme X.509, s'appuient sur une chaîne de confiance. Cette chaîne assure la vérification et la validation de la légitimité des certificats électroniques.

L'emploi combiné de la signature électronique et des certificats électroniques facilite l'identification de l'origine d'une donnée ou certifie son approbation par une entité spécifique. Cette entité, mentionnée dans le certificat électronique destiné à l'utilisateur final, est associée à la paire de clés numériques asymétriques utilisée pour signer électroniquement une donnée. Trois applications pratiques dominent actuellement dans l'écosystème informatique : les certificats SSL, les technologies de blockchain, et la signature électronique de documents.

La signature électronique de documents, une branche spécifique de la signature électronique, permet à des individus ou à des entités juridiques (ainsi qu'à leurs représentants, qu'ils soient directs ou indirects) de confirmer l'origine d'un document ou d'exprimer leur accord à son égard.

L'objectif principal de la signature électronique de documents est d'assurer la fiabilité d'un document tout en permettant sa transmission sous forme électronique. Cette procédure sera désormais désignée sous le terme "signature électronique de document".

Pour réaliser une signature électronique de document tout en préservant la validité juridique de cette signature, il est crucial de suivre une série d'étapes définies dans un "processus global de signature".

En effet, ce domaine d'activité est régi par de nombreuses normes de l'état de l'art (nous pouvons citer EIDAS au sein de l'union européenne ou ESIGN act au Etats-Unis d'Amérique ).

Dans le cadre du processus global de signature et, de façon générale, de la présente invention, on désigne par "service de signature" le prestataire responsable de veiller à la correcte exécution de ce processus global de signature. Ce prestataire offre un éventail de services grâce à une infrastructure comprenant des ressources matérielles, logicielles et humaines, destinées à aligner le dit processus global de signature sur lesdites normes de l'état de l'art. L'infrastructure bénéficie idéalement d'un ensemble d'applications logicielles et d'un ou plusieurs serveurs informatiques capables de répondre aux exigences logiques et techniques du processus, tout en se conformant aux normes de l'état de l'art.

Dans le cadre dudit processus global de signature et d'une manière générale dans le cadre de la présente invention, le terme «document à signer» se réfère à toute donnée numériquement codée, telle qu'une image, un enregistrement audio, un document texte, ou une donnée structurée provenant d'un processus informatique. De manière avantageuse, ce document est accompagné de métadonnées visant à en faciliter la découverte, l'utilisation et/ou le stockage. Cette donnée peut être modifiée jusqu'au commencement de la phase de signature technique du document, laquelle est détaillée ultérieurement dans le document.

Dans le cadre dudit processus global de signature et d'une manière générale dans le cadre de la présente invention, le terme de "signataire" désigne l'individu ou l'entité juridique qui certifie l'origine ou exprime son approbation vis-à-vis du document à signer.

### Description d'un processus global de signature de document.

Pour satisfaire aux exigences des normes de l'état de l'art et maintenir ainsi la chaîne de confiance et la valeur probante de la signature électronique, il est essentiel de réaliser au minimum les phases suivantes :
- Phase d'initialisation de la demande de signature: Cette étape permet au commanditaire de la signature d'envoyer une demande de signature aux approbateurs de la signature. Le commanditaire peut être le signataire lui-même, une autre personne physique, une personne morale agissant par l'intermédiaire de l'un de ses représentants, ou un système informatique automatisé. Le document à signer, ou une version dérivée ou partielle de celui-ci, peut être fourni à ce stade de manière optionnelle. Si un document est fourni lors de cette phase, le service de signature est chargé de vérifier que 1/ le document présenté durant la session de signature correspond bien au document que le commanditaire désirait initialement soumettre à la signature et 2/ que l'approbateur va in fine bien approuver le document qu'il/elle a visualisé . La responsabilité d'assurer le bon déroulement de cette phase incombe au service de signature.
- Optionnellement, une phase d'identification d'un approbateur permettant de s'assurer de l'identité du signataire et, dans le cadre d'une signature au nom d'une personne morale, de sa légitimité à représenter cette dite personne morale. Cette phase permet optionnellement d'associer le sujet d'un certificat électronique d'utilisateur final a une paire de clés cryptographique asymétrique.

Dans le cadre d'un processus global de signature, il est à noter que le terme "approbateur" entend désigner la personne physique ou le dispositif informatique qui va marquer son approbation à signer le document signer et vérifier pour le compte du signataire la conformité du document à signer. L'approbateur et le signataire peuvent être identiques ou différents.

La possession de ladite clé privée de ladite paire de clés peut être maintenue sous la responsabilité du signataire (on parlera alors de "signature effectué sous la responsabilité du signataire") ou délégué à une autorité de confiance qui effectura la signature opérationnelle pour le compte du sujet du certificat. Cette délégation est soumise à des contraintes opérationnelles fortes, nécessitant une conformité aux dites normes de l'état de l'art. Selon lesdits modes de possession de la clé privée, les mécanismes de "signature technique du document" différeront. Dans tous les cas, cette dite phase d'identification permet au service de signature de récolter un ensemble de renseignements qui pourront être adjoints aux preuves de signature afin d'en augmenter la valeur probante. Il est de la responsabilité du service de signature de garantir la bonne exécution de cette phase.

La phase d'identification n'a pas d'ordonnancement par rapport à la phase d'initialisation, elle peut être réalisée avant ou après celle-ci. ladite phase d'identification peut aussi être optionnellement inclue dans la phase de session de signature présentée dans la suite du document.
- Phase de session de signature (ou cérémonie de signature): Cette phase a pour but de recueillir l'assentiment d'un approbateur à attester l'origine ou à marquer son approbation envers le document à signer. Il incombe au service de signature d'assurer le bon déroulement de cette phase.

Au cours de la session de signature, plusieurs étapes clés sont nécessaires pour conférer la légitimité à la signature :
- Étape d'identification ou d'authentification du signataire: Cette étape vise à vérifier l'identité du signataire pour s'assurer qu'il est bien la personne autorisée à signer le document. Cette étape peut également être effectuée en dehors de la phase de session de signature (voir ci-dessus),
- Étape de prise de connaissance du document à signer : Conformément aux normes de l'état de l'art, il est impératif que l'approbateur ait en la possibilité de prendre connaissance du document avant de le signer. Cette étape garantit que le signataire est pleinement informé du contenu du document qu'il s'apprête à approuver.

- Enregistrement formel de la volonté du signataire : Cette étape consiste à documenter explicitement l'accord du signataire à certifier l'origine ou à exprimer son approbation vis-à-vis du document à signer.
   - Phase de signature technique du document: Après une session de signature réussie, cette phase implique la réalisation d'une signature cryptographique. Ce processus permet d'associer de manière sécurisée le document à signer à une paire de clés cryptographiques asymétriques et, par transitivité, à un certificat électronique. Pour optimiser cette étape, il est recommandé de ne pas signer directement le document lui-même, mais plutôt une empreinte numérique ou somme de contrôle de celui-ci. Cette méthode contribue à sécuriser la signature tout en garantissant l'intégrité du document.

Dans le cadre dudit processus global de signature et d'une manière générale dans le cadre de la présente invention, le terme «somme de contrôle» fait référence à une fonction cryptographique déterministe qui, à partir d'une donnée source, génère une empreinte numérique de longueur fixe et unique. Cette empreinte est conçue pour être résistante aux collisions, c'est-à-dire que deux données sources différentes ne devraient pas aboutir à la même empreinte. Une caractéristique fondamentale de cette somme de contrôle est qu'elle est conçue pour être à sens unique, rendant ainsi l'opération irréversible. Parmi les algorithmes pouvant être employés pour créer une telle somme de contrôle, SHA-256 et SHA-512 sont des exemples notables.

Après l'achèvement réussi de la phase de signature technique du document, il est possible de procéder à la phase de génération des preuves de signature. Cette étape implique d'encapsuler la signature technique réalisée au sein d'un élément numériquement encodé qui permettra, par la suite, de vérifier la validité de la signature. Pour renforcer la valeur probante de la signature, il est courant d'inclure dans cette preuve de signature une variété d'éléments supplémentaires. Parmi les formats susceptibles d'être utilisés pour encoder ces preuves, on trouve notamment XaDES, PaDES, CaDES, ASIC-E, les Verifiable Credentials du W3C ou encore C2PA. Cette liste n'est pas exhaustive. Dans le cadre du processus global de signature et de façon générale pour cette invention, ces formats sont désignés sous le terme de "formats normés de preuve de signature". Les "preuves de signature", telles que définies dans le contexte de cette invention, correspondent aux fichiers générés durant la phase de création des preuves de signature. Ces preuves de signature sont des données structurées, encodées numériquement, principalement basées sur les formats normés de preuve de signature mentionnés ci-dessus. Elles peuvent cependant être adaptées ou dérivées de ces formats standards par l'ajout de données, l'encapsulation, ou l'extension pour répondre à des besoins spécifiques liés à des secteurs d'activité particuliers.

La preuve de signature peut être intégrée directement dans le document qui a été signé, auquel cas on parle de signature embarquée, ou elle peut rester séparée du document en question, ce qui est alors désigné comme une signature détachée.

Dans de nombreux systèmes actuels mettant en oeuvre le processus global de signature de documents, une représentation graphique de la signature électronique peut être ajoutée aux preuves de signature et apposée sur un document graphique qui représente cette preuve de signature. Cette représentation graphique de la signature électronique a pourseul but de faciliter l'interprétation de la preuve de signature par un utilisateur humain. Cependant, elle ne possède pas en elle-même de valeur probante réelle à moins d'être couplée à une véritable preuve de signature, telle que décrite précédemment.

Optionnellement et avantageusement, un service de signature électronique peut proposer un service de vérification de signature électronique. Ce service permet à toute personne détenant une preuve de signature, générée suite à l'application du processus global de signature électronique de document par ce service de signature, de confirmer la validité de la signature électronique des documents en lien avec cette preuve. Ce service de vérification peut, de manière avantageuse et non exhaustive, contrôler l'intégrité d'un document par rapport à son état au moment de la signature, assurer la non-répudiation du signataire au moment de la signature, ou confirmer la conformité technique de la signature électronique.

Le service de signature peut proposer d'exécuter le processus global de signature de manière intégrale ou partielle. Il est également possible qu'il délègue certaines parties du processus à des tiers. Ces délégations sont encadrées par des accords contractuels entre le service de signature et l'entité tierce à laquelle une portion du processus est confiée. Il est impératif que ces délégations respectent les normes de l'état de l'art en vigueur.

Dans le cadre de la fourniture d'un service de signature d'une manière intégrale, le prestataire maintient sous sa supervision l'ensemble des étapes nécessaires et de commodité au bon déroulement du processus de signature de document. Ce mode de fonctionnement est courant dans l'écosystème actuel de la signature électronique de document car il répond efficacement au besoin de signature électronique destiné au grand public. Dans ce mode de fonctionnement, Toutes les informations, y compris les documents, sont transmises aux services de signatures, qui supervisent de bout en bout le processus global de signature de document.

Dans le cadre de la fourniture d'un service partiel du processus de signature par un service signature, bien qu'exécutant d'une manière partielle le processus, le service de signature reste le garant de la bonne exécution de celui-ci (dans la limite des normes de l'état de l'art). En ce qui concerne ladite phase de session de signature précédemment citée, il est commun d'intégrer cette étape au sein d'une application exploitante. Ce mode d'intégration se place dans le cadre d'une fourniture d'un service partiel du processus de signature par un service signature.

Ce mode d'intégration offre la possibilité d'insérer un processus de signature électronique de documents dans un cadre opérationnel plus vaste, tout en confiant au service de signature la responsabilité de garantir la validité juridique des signatures et leur conformité aux normes de l'état de l'art. Les applications de cette approche d'intégration incluent, par exemple, la gestion des aspects contractuels avec des clients ou fournisseurs, ou la gestion de documents qui doivent être transmis tout en préservant la chaîne de confiance, tels que la facturation électronique ou les documents relatifs à la gouvernance interne.

Nous parlerons dans la suite du document d'une "intégration de la session de signature embarquée au sein d'une application exploitante".

D'un point de vue général dans le cadre dudit processus général de signature de document une "application exploitante" est un dispositif informatique permettant l'intégration d'un processus global de signature dans un cadre opérationnel plus vaste. Elle est connectée à un ou plusieurs autres dispositifs informatiques ou systèmes informatiques par l'intermédiaire d'un réseau de communication de données tel que l'Internet ou un intranet. Cette dite application exploitante doit être en capacité d'instancier l'interface de signature dans les conditions contractuellement stipulées entre l'exploitant du service de signature et le service de signature. En particulier, l'exploitant du service de signature ne devra en aucun interférer dans la bonne exécution ou modifier d'une manière impromptue le contenu de l'interface de signature (notion définie dans la suite du document) fourni par le service de signature en dehors des interactions permise par cette dite interface de signature. Ces interactions sont définies dans un contrat de service entre ces deux dispositifs informatiques. Nous pouvons citer par exemple les interactions suivantes: l'instantiation et la déinstantiantion de l'interface de signature à partir de l'application exploitante
- l'initialisation d'une session de signature au sein de l'interface de signature par l'application exploitante
- l'interruption d'une session de signature en cours au sein de l'interface de signature par l'application exploitante
- la réponse à une requête initiée depuis l'interface de signature à destination de l'application exploitante.

Cette application exploitante peut-être de différentes nature:
- Il peut s'agir d'une application native exécutée directement sur le système d'exploitation du terminal de signature (par exemple une application mobile sur un téléphone portable).
- Il peut s'agir d'une application web, exécuter au sein d'un navigateur web.
- Dans le cas où le signataire est un système automatisé, il peut s'agir d'un programme informatique, compilé ou interprété, exécuté comme un processus ou sous processus informatique au sein d'un système d'exploitation.

Dans le cadre dudit processus global de signature et d'une manière générale dans le cadre de la présente invention, le terme "exploitant du service de signature" désigne la personne morale qui exploite l'application exploitante tel que décrite précédemment. Il s'agit d'une manière générale, mais non exclusivement, d'une personne morale qui souhaite intégrer un processus de signature électronique dans un processus interne avec un cadre opérationnel plus vaste.

Pour que le service de signature puisse assurer l'exactitude des étapes requises, consolidant ainsi la légitimité de la signature et le respect des standards de l'état de l'art, il est judicieux d'implémenter un module informatique au sein de l'application utilisatrice, qui fonctionnera sous la supervision du service de signature. En effet, les procédures et obligations nécessaires pour se conformer aux normes établies sont complexes et leurs applications exigent une expertise spécifique, et il est difficile pour une entité qui n'est pas spécialiste de la signature électronique de se conformer à toutes les exigences requises par les normes de l'état de l'art.

Dans le cadre dudit processus global de signature, le terme "interface de signature" désigne ce module. Cette notion sera affinée par la suite afin de se conformer aux exigences opérationnelles de l'invention.

Dans le cadre de la présente invention, le terme "terminal de signature" entend un terminal utilisable par l'approbateur afin de procéder l'exécution d'une session de signature du document. Selon les mode de réalisation du processus global de signature il peut être :
- un dispositif informatique disposant d'une interface graphique, dans le cas où l'approbateur est une personne physique ou un représentant physique d'une personne morale. par exemple, ce terminal peut être un ordinateur de bureau, un ordinateur portable, une tablette, un dispositif informatique mobile,
- un dispositif informatique permettant l'exécution d'un programme informatique dans le cas ou le signataire est un système informatique automatisé. Cela peut être d'une manière non exhaustive, un serveur informatique, une machine virtuelle ou un système distribué de serveur informatique.

Dans tous les cas, le terminal de signature :
- peut exécuter un système d'exploitation quelconque,
- doit être en capacité d'exécuter l'application exploitante et l'interface de signature dans les conditions contractuellement stipulées entre le signataire et respectivement l'exploitant du service de signature et le service de signature,
- doit être en capacité de communiquer avec les serveurs exploitant le service de signature (généralement à travers une connexion internet ou intranet).

L'objectif de la présente invention est de permettre la présentation du document à signer au sein de l'interface de signature dans le cadre d'une intégration de la session de signature embarquée au sein d'une application exploitante sans qu'il y ait besoin de transmettre le document au serveur exploitant un service de signature. Ce faisant, elle vise à satisfaire les exigences des normes de l'état de l'art, assurant ainsi la légitimité de la signature, tout en préservant la confidentialité du document vis-à-vis du service de signature.

### Résumé de l'invention

Dans le cadre de cette description, les termes sont à comprendre dans leur sens commun dans le domaine technique et plus particulièrement selon les définitions utilisées ci-dessus.

Cette invention s'avère particulièrement adaptée à l'usage de signatures détachées, mais elle peut également être mise en oeuvre avec des signatures embarquées.

L'invention est un processus qui s'inscrit dans le cadre du processus global de signature tel que décrit précédemment. Ses innovations principales se manifestent au cours de la phase de session de signature, tout en s'appuyant sur d'autres étapes du processus global de signature pour son fonctionnement global, tout particulièrement l'étape d'initialisation de la demande de signature. L'invention est spécifiquement conçue pour fonctionner dans le cadre de l'intégration de la session de signature embarquée au sein d'une application exploitante avec des approbateurs qui sont des personnes physiques ou des représentants physiques d'une personne morale. L'adoption de ce mode d'intégration débloque des caractéristiques essentielles qui permettent la mise en oeuvre de l'invention. Une des propriétés essentielles ainsi débloquée est l'exécution de l'interface de signature, qui est sous la supervision du service de signature, mais qui est "commandée" par l'application exploitante, elle-même sous la supervision de l'exploitant du service de signature, sur le terminal de signature qui est sous le contrôle de l'approbateur. Cette configuration permet de concevoir des flux de travail qui maintiennent la confidentialité du document à signer tout au long de la session de signature tout en se conformant aux exigences des normes de l'état de l'art.

Dans le cadre de l'invention, le terminal de signature est conçu pour répondre aux obligations spécifiques du processus global de signature tel que décrit précédemment, que ce soit pour un individu ou pour un représentant légal d'une entité juridique. Ainsi préférentiellement, ce terminal est un dispositif informatique équipé d'une interface graphique qui facilite l'interaction de l'utilisateur via divers périphériques d'entrée tels que clavier, souris, écran tactile, ou autres dispositifs de reconnaissance de mouvements. Ce dispositif se doit d'être connecté à un réseau informatique, tel que l'internet ou un réseau interne type intranet. Ce dit dispositif est préférentiellement équipé d'un système d'exploitation permettant d'opérer les interactions bas niveau avec les composants le constituant et permettant l'exécution d'application compilée ou interprétée par l'utilisateur final. De manière exemplaire, et selon le mode de réalisation préféré de l'invention, le terminal peut prendre la forme d'un ordinateur de bureau, portable, tablette, appareil mobile ou casque de réalité augmentée, selon le mode de réalisation privilégié de l'invention. Nous nommerons ce dispositif "terminal de signature dans le cadre de l'invention" dans la suite du document.

Dans le cadre de l'invention, l'application exploitante est configurée de telle manière à ce qu'elle réponde aux exigences lui incombant dans le cadre d'un processus global de signature tel que décrit précédemment, que ce soit pour un individu ou pour un représentant légal d'une entité juridique. Cette application peut être de type natif, c'est-à-dire exécutée directement sur le système d'exploitation du terminal, ou bien une application web qui s'exécute via un navigateur internet. Dans ce dernier cas, le navigateur est lui-même installé comme une application native sur le terminal de signature.

Selon le mode de réalisation préféré de l'invention, l'interface de signature est conçue pour répondre aux exigences du processus global de signature, comme détaillé précédemment. Elle est intégrée à l'application exploitante sous forme de composant exécutable, et est programmée spécifiquement pour ne pas transmettre le document à signer à un service externe pendant le processus de signature.

L'invention concerne un procédé de signature électronique d'un document comprenant les étapes suivantes :
- [50] initialisation d'une demande de signature de document par un commanditaire de la demande de signature et fourniture, vers un service de signature électronique, d'une première somme de contrôle spécifique du document à signer,
- [100] demande d'initialisation, par une application exploitante, d'une session de signature à instancier au sein d'une interface de signature,
- [200] la fourniture à ladite interface de signature par ladite application exploitante des éléments permettant l'initialisation d'une session de signature,
- [300] la fourniture par ledit service de signature à l'interface de signature des données relatives à l'initialisation de la session de signature comprenant ladite première somme de contrôle,
- [400] l'émission par ladite interface de signature vers ladite application exploitante d'une demande de fourniture dudit document à signer ou d'une URI permettant d'y accéder,
- [500] fourniture par ladite application exploitante des données dudit document à signer ou l'URI permettant d'accéder au dit document à signer,
- [600] récupération par ladite interface de signature des données dudit document à signer si l'information fournie à l'étape [500] est une URI.
- [700] le calcul, par ladite interface de signature, d'une somme de contrôle dudit document à signer récupéré à l'étape [500] ou [600] et comparaison, par ladite interface de signature, de ladite première somme de contrôle avec ladite somme de contrôle,
- [800] présentation à l'approbateur, par ladite interface de signature, dudit document à signer,
- [1100] autorisation par ladite interface de signature, de l'approbation par l'approbateur dudit document à signer sous réserve que la comparaison effectuée à l'étape [700] montre l'identité entre les deux sommes de contrôle.

On comprend ainsi que dans le procédé selon l'invention, le document à signer n'est jamais communiqué au service de signature mais reste uniquement entre l'approbateur, l'exploitant du service de signature et les éléments sous leurs contrôles. En effet, bien que le document soit transmis à l'interface de signature, qui est sous la supervision du service de signature, cette dite interface de signature est exécutée sur le terminal de signature qui est sous le contrôle de l'approbateur. Ainsi, en prenant en considération que l'interface de signature a été programmée de manière à ne pas transmettre le document à signer au service exploitant un service de signature, le service de signature ne prend pas connaissance du document à signer lors du processus de signature.En conséquence, une confidentialité totale du document à signer envers le service de signature est assurée, couplée à l'assurance que le document signé correspond au document présenté au signataire et l'assurance que le document correspond à celui voulu par le commanditaire lors de la phase d'initialisation de la demande de signature. Selon un mode de réalisation préféré de l'invention, le procédé comprend en outre une étape :
- [900], préalable à l'étape [1100] et postérieure à l'étape [800], demande par ladite interface de signature, d'élément d'authentification du signataire.

Dans le cadre de la présente invention, le terme « élément d'authentification du signataire » entend désigner tout moyen d'authentification permettant de valider que le signataire est bien la personne qu'elle prétend être

Selon un mode de réalisation préféré de l'invention, le procédé comprend en outre une étape :
- [1000], préalable à l'étape [1100] et postérieure à l'étape [800], présentation par l'interface de signature d'éléments complémentaires à la signature dudit document à signer.

Dans le cadre de la présente invention, le terme « éléments complémentaires à la signature dudit document à signer» entend notamment désigner des données différentes dudit document à signer parmi lesquels on peut notamment citer les conditions générales de vente et les formulaires (e.g. de contact).

### Brève description des dessins

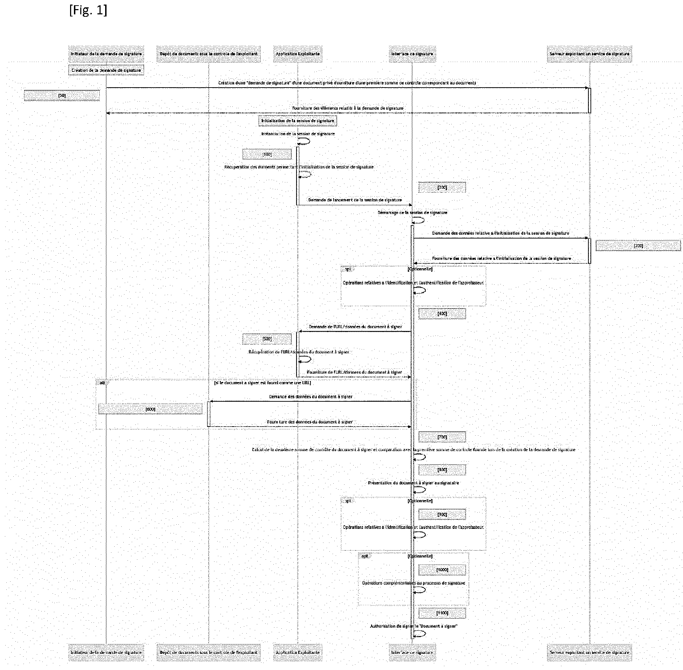

[Fig. 1] montre un exemple d'un procédé permettant de fournir un service de signature électronique, conformément à un mode de réalisation de la présente invention.

### Description détaillée de l'invention

Dans les procédés de l'art antérieur, les personnes souhaitant utiliser un service de signature électronique doivent révéler le contenu du document électronique au service de signature. Néanmoins, il arrive que le document renferme des données confidentielles que l'utilisateur préférerait ne pas divulguer au service de signature électronique.

Avantageusement, des conditions contractuelles entre le service de signature, l'exploitant du service de signature et le signataire sont établies entre toutes les parties afin de se conformer aux exigences des normes de l'état de l'art et ainsi garantir l'exécution du processus de signature dans les conditions qui permettent à l'invention de fonctionner tel que voulu par les parties. Parmi ces conditions, nous retiendrons particulièrement les suivantes :
- le signataire s'engage à maintenir le terminal de signature dans des conditions de sécurité,
- le signataire s'engage à ne pas modifier ni l'application exploitante, ni l'interface de signature, lorsque ceux-ci sont mis à sa disposition sur le terminal de signature, par rapport à ce qui a été fourni par l'exploitant du service de signature et le service de signature,
- l'exploitant du service de signature s'engage à intégrer l'interface de signature dans l'application exploitante conformément aux exigences notifiées par le service de signature
- le service de signature s'engage à ne pas transférer le document dont la signature est l'objet depuis l'interface de signature vers les serveurs exploitant un service de signature.

Le procédé selon l'invention peut être mis en oeuvre par un système informatique classique configuré de sorte à mettre en oeuvre un procédé selon l'invention.

Dans le cadre de l'invention, le terminal de signature est conçu pour répondre aux obligations spécifiques du processus global de signature tel que décrit précédemment, que ce soit pour un individu ou pour un représentant légal d'une entité juridique. Ainsi, ce terminal est un dispositif informatique équipé d'une interface graphique qui facilite l'interaction de l'utilisateur via divers périphériques d'entrée tels que clavier, souris, écran tactile, ou autres dispositifs de reconnaissance de mouvements. Ce dispositif se doit d'être connecté à un réseau informatique, tel que l'internet ou un réseau interne type intranet. Ce dit dispositif doit être équipé d'un système d'exploitation permettant d'opérer les interactions bas niveau avec les composants le constituant et permettant l'exécution d'application compilée ou interprétée par l'utilisateur final. De manière exemplaire, et selon le mode de réalisation préféré de l'invention, le terminal peut prendre la forme d'un ordinateur de bureau, portable, tablette, appareil mobile ou casque de réalité augmentée, selon le mode de réalisation privilégié de l'invention. Nous nommerons ce dispositif "terminal de signature dans le cadre de l'invention" dans la suite du document.

Dans le cadre de l'invention, l'application exploitante est configurée de telle manière à ce qu'elle réponde aux exigences lui incombant dans le cadre d'un processus global de signature tel que décrit précédemment, que ce soit pour un individu ou pour un représentant légal d'une entité juridique. Cette application peut être de type natif, c'est-à-dire exécutée directement sur le système d'exploitation du terminal, ou bien une application web qui s'exécute via un navigateur internet. Dans ce dernier cas, le navigateur est lui-même installé comme une application native sur le terminal de signature.

Dans le cadre de l'invention, nous appelons applications natives des applications qui sont conçues pour être exécutées directement sur le système d'exploitation du terminal de signature, permettant une intégration étroite avec les ressources matérielles et logicielles du dispositif. Elles peuvent accéder directement aux API du système d'exploitation. Les applications natives supportent l'intégration de librairies internes ou issues du système d'exploitation, facilitant l'ajout de fonctionnalités avancées telles que la cryptographie ou la gestion des périphériques d'entrée/sortie. Ces applications peuvent interagir avec d'autres applications installées sur le terminal par des mécanismes tels que les intents sur Android ou les URL schemes sur iOS, permettant un échange fluide de données entre applications.

Dans le cadre de l'invention nous appelons applications web des applications qui sont exécutées dans un navigateur internet qui fonctionne comme une application native sur le terminal de signature. Ces applications sont généralement moins dépendantes du système d'exploitation et peuvent être utilisées sur divers dispositifs sans modification substantielle. Elles requièrent une connexion Internet pour charger les ressources web, bien que certaines ressources puissent être stockées localement grâce à des technologies comme les service workers pour une utilisation hors ligne. Les applications web peuvent intégrer des composants tels que des iframes pour encapsuler d'autres applications web, ou utiliser des bibliothèques JavaScript, soit embarquées directement dans l'application, soit chargées à partir de serveurs externes. Cette modularité facilite l'ajout de fonctionnalités telles que des interfaces utilisateur interactives ou des connexions à des API externes.

Selon le mode de réalisation préféré de l'invention, l'interface de signature est conçue pour répondre aux exigences du processus global de signature, comme détaillé précédemment. Elle est intégrée à l'application exploitante sous forme de composant exécutable, et est programmée spécifiquement pour ne pas transmettre le document à signer à un service externe pendant le processus de signature. Cette interface peut être fournie à l'application exploitante de deux manières principales :
Fourniture dynamique: L'interface de signature est injectée dans l'application au moment de son instantiation. Cela signifie que l'interface peut être chargée ou mise à jour en temps réel à partir du service de signature, permettant une flexibilité maximale et la possibilité d'adapter l'interface aux besoins spécifiques de l'utilisateur ou aux exigences de sécurité au moment de l'exécution.
Fourniture lors de la construction de l'application: Dans ce cas, l'interface de signature est intégrée sous forme de bibliothèque de programme informatique lors du développement de l'application exploitante. Cette méthode assure que l'interface de signature est une composante statique du logiciel, optimisée pour la sécurité et la performance, car elle fait partie intégrante de l'application dès son déploiement.

Indépendamment du mode d'intégration, l'interface est fournie par le service de signature qui interdit contractuellement toute modification de celle-ci. Selon les modes de réalisation préférés de l'invention, l'intégrité de l'interface peut être contrôlée par des mécanismes de signature de code, assurant que seul le code authentique et vérifié est exécuté. Dans le cas des applications web, l'interface de signature peut être intégrée via un mécanisme d'iFrame (https://dev.w3.org/html5/spec-LC/the-iframe-element.html#the-iframe-element), ce qui permet de l'isoler du reste de l'application exploitante tout en facilitant son intégration sécurisée. Dans le contexte de l'invention, il est crucial de noter que la session de signature est exécuté dans l'interface de signature, qui est sous la supervision du service de signature, mais qui est "commandée" par l'application exploitante, elle-même sous la supervision de l'exploitant du service de signature, sur le terminal de signature qui est sous le contrôle de l'approbateur.

Par conséquent, si un document ou une donnée est envoyé à l'interface de signature sans être transmis aux serveurs exploitant un service de signature, cette information demeure inconnue du service de signature. Cela permet de transmettre un document ou une donnée à l'interface de signature tout en gardant la confidentialité de cette information vis-à-vis du service de signature.

Préférentiellement, le système comprend un serveur hébergeant un service de signature ayant au moins une mémoire, et un ou plusieurs processeurs couplés de manière opérationnelle. Selon un mode de réalisation préféré de l'invention, les échanges de données entre l'application exploitante et le service de signature sont réalisés via le protocole HTTP et encore plus préférentiellement HTTPS.

Selon un mode de réalisation préféré de l'invention, les échanges de données entre l'interface de signature et le service de signature sont réalisés via le protocole HTTP et encore plus préférentiellement HTTPS.
- [50] initialisation d'une demande de signature de document par un commanditaire de la demande de signature et fourniture, vers un service de signature électronique d'une première somme de contrôle spécifique au dit document à signer.

Lorsque le commanditaire de la demande de signature fournit cette première somme de contrôle, le service de signature à alors en sa possession le moyen d'identifier de façon certaine le document à signer sans en connaître le contenu. Afin de fournir la première somme de contrôle, le commanditaire doit, soit disposer du document à signer, soit de la somme de contrôle préalablement calculée par un service tiers.

Optionnellement, si ledit "commanditaire de la demande de signature" est un tiers extérieur par rapport à l'application exploitante, les éléments permettant les initialisations de session de signature à partir des demandes de signature se doivent d'être transmises du tiers extérieur vers l'application exploitante afin de permettre l'initialisation de la session de signature. Le mode de transmission de ces données reste à la discrétion de l'implémentation de l'application exploitante A la réception de la demande, le service de signature va autoriser la possibilité d'initialiser une une session de signature sur l'interface de signature.
- [100] demande d'initialisation, par une application exploitante, d'une session de signature à instancier au sein d'une interface de signature.

Cette étape se réalise sur l'application exploitante. Elle consiste à démarrer la session de signature qui intervient dans un cadre opérationnel plus vaste. Lors de cette étape, l'application exploitante récupère les informations nécessaires en son sein afin de permettre de les transmettre dans l'étape suivante (étape [200]) à l'interface de signature dans le but de lancer une session de signature au sein de cette dite interface de signature.
- [200] la fourniture à ladite interface de signature par ladite application exploitante des éléments permettant l'initialisation d'une session de signature

Cette étape consiste à fournir à ladite interface de signature par ladite application exploitante les éléments permettant l'initialisation d'une session de signature. Préalablement à cette étape, si l'application exploitante n'a pas encore instancier l'interface de signature, celle-ci est instanciée par ladite application exploitante.
- [300] la fourniture par ledit service de signature à l'interface de signature des données relatives à l'initialisation de la session de signature comprenant ladite première somme de contrôle

Cette étape consiste en une demande au serveur exploitant un service de signature des données nécessaires à la mise en oeuvre du processus de signature. Parmi ces données on peut notamment citer l'identifiant de la demande de signature et l'identification de l'approbateur. D'autres éléments tels que des éléments d'authentification ou de contexte d'exécution peuvent aussi être fournis.

Simultanément ou postérieurement à cette demande, le service de signature va communiquer à l'interface de signature la première somme de contrôle. Cette fourniture, se doit d'avoir lieu de toute manière avant l'étape [700].
- [400] l'émission par ladite interface de signature vers ladite application exploitante d'une demande de fourniture dudit document à signer ou d'une URI permettant d'y accéder.

Dans le cadre de la présente invention, le terme URI (Uniform Resource Identifier) désigne une chaîne de caractères utilisée pour identifier une ressource sur un réseau informatique de manière unique. Cette identification peut être faite par nom, emplacement, ou les deux, et permet d'accéder à une ressource externe, telle qu'un fichier, un service web, ou un élément de base de données, via Internet ou un intranet. L'URI englobe les URL (Uniform Resource Locators) qui fournissent des adresses concrètes de ressources, ainsi que les URN (Uniform Resource Names) qui offrent une identification unique à une ressource indépendamment de son emplacement. L'utilisation des URI dans le processus informatique de cette invention permet une interopérabilité et une communication efficaces entre différents systèmes et composants logiciels.
- [500] fourniture par ladite application exploitante des données dudit document à signer ou l'URI dudit document à signer

En réponse à cette demande, l'application exploitante va envoyer à l'interface de signature le dit document à signer. Alternativement, ladite application exploitante va envoyer l'URI permettant d'accéder au document à signer qui peut être ensuite téléchargé par l'interface de signature.
- [600] récupération par ladite interface de signature des données dudit document à signer si l'information fournie à l'étape [500] est une URI.
- [700] le calcul, par ladite interface de signature, d'une somme de contrôle dudit document à signer récupéré à l'étape [500] ou [600] et comparaison, par ladite interface de signature, de ladite première somme de contrôle avec ladite somme de contrôle

On comprend ainsi que si la première et la deuxième somme de contrôle sont identiques cela signifie que le document utilisé dans le cadre de l'initialisation de la demande de signature ([étape 50]) et le document à signer reçu par l'interface de signature lors de l'étape [500] ou [600] sont strictement identiques.

[800] présentation à l'approbateur, par ladite interface de signature, dudit document à signer L'approbateur est en mesure de prendre connaissance dudit document à signer sur l'interface de signature.

Dans le cas où le document électronique est crypté, l'étape d'affichage et de consultation du document est réalisée postérieurement au décryptage de celui-ci.

L'interface de signature affiche une interface utilisateur (qui est configurée pour recevoir une entrée de l'utilisateur afin de signer électroniquement le document. Ces données peuvent être saisies au clavier ou à la souris, par exemple lorsque l'utilisateur tape son nom dans un champ de saisie affiché dans le navigateur.

[1100] autorisation, par ladite interface de signature, de l'approbation par l'approbateur dudit document à signer. Cette étape est caractérisée en ce que les étapes [800] et [1100] ne sont mises en oeuvre que si la comparaison effectuée à l'étape [700] montre l'identité des deux sommes de contrôle.

Dans le cas, ou après comparaison des deux sommes de contrôle, il est constaté que lesdites sommes sont différentes l'interface de signature n'autorise pas l'approbation du document à signer.

De manière préférentielle, l'interface de signature provoque l'envoie, de l'interface de signature vers le service de signature d'informations complémentaires. Ces dernières peuvent comprendre, par exemple, la première et la deuxième somme de contrôle, la vérification de la somme de contrôle, la date et l'heure actuelles, ou d'autres données représentant la transaction entre l'interface de signature et le service de signature.

Selon un mode de réalisation préféré de l'invention, ladite étape [1000] comprend la fourniture d'instructions exécutables par le serveur exploitant un service de signature électronique au terminal de signature qui lorsqu'elles sont exécutées dans une iFrame permet la signature sécurisée dudit document.

## Revendications

1. Procédé de signature d'un document électronique comprenant les étapes:
- [50] initialisation d'une demande de signature de document par un commanditaire de la demande de signature et fourniture, vers un service de signature électronique, d'une première somme de contrôle spécifique du document à signer,
- [100] demande d'initialisation, par une application exploitante, d'une session de signature à instancier au sein d'une interface de signature,
- [200] la fourniture à ladite interface de signature par ladite application exploitante des éléments permettant l'initialisation d'une session de signature,
- [300] la fourniture par ledit service de signature à l'interface de signature des données relatives à l'initialisation de la session de signature comprenant ladite première somme de contrôle,
- [400] l'émission par ladite interface de signature vers ladite application exploitante d'une demande de fourniture dudit document à signer ou d'une URI permettant d'y accéder,
- [500] fourniture par ladite application exploitante des données dudit document à signer ou l'URI permettant d'accéder au dit document à signer,
- [600] récupération par ladite interface de signature des données dudit document à signer si l'information fournie à l'étape [500] est une URI.
- [700] le calcul, par ladite interface de signature, d'une somme de contrôle dudit document à signer récupéré à l'étape [500] ou [600] et comparaison, par ladite interface de signature, de ladite première somme de contrôle avec ladite somme de contrôle,
- [800] présentation à l'approbateur, par ladite interface de signature, dudit document à signer,
- [1100] autorisation, par ladite interface de signature, de l'approbation par l'approbateur dudit document à signer sous réserve que la comparaison effectuée à l'étape [700] montre l'identité des deux sommes de contrôle.

2. Procédé de signature d'un document électronique selon l'une des revendications précédentes **caractérisé en ce que** le procédé comprend en outre une étape :
- [900], préalable à l'étape [1100] et postérieure à l'étape [800], demande par ladite interface de signature, d'élément d'authentification du signataire.

3. Procédé de signature d'un document électronique selon l'une des revendications précédentes **caractérisé en ce que** le procédé comprend en outre une étape :
- [1000], préalable à l'étape [1100] et postérieure à l'étape [800], présentation par l'interface de signature d'éléments complémentaires à la signature dudit document à signer.

4. Procédé de signature d'un document électronique selon l'une des revendications précédentes **caractérisé en ce que** ledit terminal de signature est un ordinateur de bureau, portable, tablette, appareil mobile ou casque de réalité augmentée.

5. Procédé de signature d'un document électronique selon l'une des revendications précédentes **caractérisé en ce que** ladite application exploitante est une application de type natif ou une application web qui s'exécute via un navigateur internet.

6. Procédé de signature d'un document électronique selon l'une des revendications précédentes **caractérisé en ce que** ladite interface de signature est programmée spécifiquement pour ne pas transmettre le document à signer à un service externe pendant le processus de signature.
